# EUROPEAN PATENT APPLICATION

(11) **EP 4 468 409 A1**
(43) Date of publication of application: **27.11.2024**
(21) Application number: 23781343.1
(22) Date of filing: 29.03.2023
(51) Int. Cl.: H01M 4/36, H01M 4/525, H01M 4/505, H01M 10/052, H01M 4/02

(54) **POSITIVE ELECTRODE MATERIAL, AND POSITIVE ELECTRODE AND LITHIUM SECONDARY BATTERY COMPRISING SAME**

(30) Priority: 29.03.2022 KR 20220039234; 28.03.2023 KR 20230040836
(71) Applicant: LG Energy Solution, Ltd., Seoul 07335 (KR)
(72) Inventor: PARK, Sang Min, Daejeon 34122 (KR); KIM, Seul Ki, Daejeon 34122 (KR); KIM, Hyeong Il, Daejeon 34122 (KR); LEE, Sang Wook, Daejeon 34122 (KR); HAN, Gi Beom, Daejeon 34122 (KR); KIM, Jong Woo, Daejeon 34122 (KR); LHO, Eun Sol, Daejeon 34122 (KR)
(74) Representative: Hoffmann Eitle
(86) International application number: PCT/KR2023/004168
(87) International publication number: WO 2023/191488

(57) **Abstract**

The present invention pertains to a positive electrode material for a lithium secondary battery, and a lithium secondary battery comprising the positive electrode material, the positive electrode material comprising a large-diameter positive electrode active material and a small-diameter positive electrode active material, wherein: the large-diameter positive electrode active material and the small-diameter positive electrode active material each independently comprise a lithium nickel-based oxide; MI/Ms is 0. 6 to 4.0, MI and Ms respectively representing the cation mixing ratio of the large-diameter positive electrode active material and the cation mixing ratio of the small-diameter positive electrode active material; and PI/Ps is 0.1 to 2.0, PI and Ps respectively representing the average particle size of primary particles in the large-diameter positive electrode active material and the average particle size of primary particles in the small-diameter positive electrode active material.

## Description

### TECHNICAL FIELD

### Cross-reference to Related Applications

This application claims priority from Korean Patent Application Nos.10-2022-0039234, filed on March 29, 2022, and 10-2023-0040836, filed on March 28, 2023, the disclosures of which are incorporated by reference herein.

### Technical Field

The present invention relates to a positive electrode material, and a positive electrode and a lithium secondary battery which include the same, and more particularly, to a positive electrode material, in which durability and high-temperature lifetime are improved by adjusting a ratio of primary particle sizes and a ratio of cation mixing ratios between two positive electrode active materials with different particle diameters, and a positive electrode and a lithium secondary battery which include the same.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂, LiMn₂O₄, etc.), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. The lithium nickel oxide is disadvantageous in that it is difficult to achieve sufficient life characteristics due to poor structural stability, and the lithium manganese oxide has excellent stability, but has a problem in that capacity characteristics are inferior. Lithium composite transition metal oxides containing two or more types of transition metals have been developed to compensate for these limitations, and, among them, a lithium nickel cobalt manganese oxide has been widely used.

Since the lithium nickel cobalt manganese oxide is generally in the form of a spherical secondary particle in which tens to hundreds of primary particles are aggregated, there is a problem in that particle breakage, in which the primary particles fall off in a rolling process during preparation of the positive electrode, is not only likely to occur, but cracks also occur along an interface between the primary particles while a volume change occurs in a unit lattice due to the intercalation and deintercalation of lithium ions when charging and discharging are repeated. In a case in which the particle breakage or cracking of the positive electrode active material occurs, since a contact area with an electrolyte solution is increased, active material degradation and gas generation due to a side reaction with the electrolyte solution are increased, and, as a result, life characteristics may be degraded.

Furthermore, in order to achieve high energy density, attempts have recently been actively made to increase an amount of nickel in the lithium nickel cobalt manganese oxide, wherein, in this case, cracks are more likely to occur in the particle during charge and discharge due to anisotropic volume change and high reactivity of the nickel and, as a result, battery performance may be degraded while a structure collapses.

Thus, there is a need to develop a high-nickel positive electrode material having high energy density as well as excellent structural stability.

### [Prior Art Document]

### [Patent Document]

(Patent Document 1) KR 10-2021-0031325 A

### DISCLOSURE OF THE INVENTION

### TECHNICAL PROBLEM

An aspect of the present invention provides a positive electrode material for a lithium secondary battery in which crack generation is reduced and surface durability is enhanced by adjusting a ratio of primary particle sizes and a ratio of cation mixing ratios between a large particle and a small particle to optimal ranges in the bimodal-type positive electrode material.

Another aspect of the present invention provides a positive electrode and a lithium secondary battery in which high-temperature lifetime is improved by using the above-described positive electrode material.

### TECHNICAL SOLUTION

According to an embodiment, the present invention provides a positive electrode material for a lithium secondary battery which includes a large-particle diameter positive electrode active material and a small-particle diameter positive electrode active material,
wherein, when a cation mixing ratio of the large-particle diameter positive electrode active material is Ml and a cation mixing ratio of the small-particle diameter positive electrode active material is Ms, Ml/Ms is in a range of 0.6 to 4.0, and
when an average particle diameter of primary particles of the large-particle diameter positive electrode active material is Pl and an average particle diameter of primary particles of the small-particle diameter positive electrode active material is Ps, Pl/Ps is in a range of 0.1 to 2.0.

Also, the present invention provides a positive electrode including the positive electrode material for a lithium secondary battery and a lithium secondary battery including the positive electrode.

### ADVANTAGEOUS EFFECTS

A positive electrode material for a lithium secondary battery according to the present invention exhibits excellent durability by adjusting a ratio of average primary particle diameters and a ratio of cation mixing ratios between a large-particle diameter positive electrode active material and a small-particle diameter positive electrode active material to optimal ranges, and thus, a lithium secondary battery, in which the positive electrode material of the present invention is used, has excellent life characteristics at high temperatures.

### MODE FOR CARRYING OUT THE INVENTION

Hereinafter, the present invention will be described in more detail.

In the present invention, the expression "single particle" is a particle composed of one single primary particle. In the present invention, the expression "primary particle" means a single crystal lacking a crystalline grain boundary, or a particle unit body that may be a polycrystal in which a grain boundary does not exist in appearance when observed by using a scanning electron microscope (SEM) with a field of view of 5,000 times to 20,000 times. In the present invention, the expression "pseudo-single particle" means a particle that is a composite formed of about 30 or less primary particles.

The expression "primary particle" in the present invention means a particle unit in which a grain boundary does not exist in appearance when observed by using a scanning electron microscope with a field of view of 5,000 times to 20,000 times, the expression "secondary particle" means a particle formed by aggregation of a plurality (tens to hundreds) of primary particles, and, specifically, the secondary particle may be an aggregate of more than about 30 primary particles.

The expression "average particle diameter of the primary particle" in the present invention means an arithmetic average value of particle diameters which is calculated after measuring the particle diameters of at least 20 primary particles observed in a scanning electron microscope image. In this case, the particle diameter means a diameter of the longest axis of the primary particle.

The expression "D50 of positive electrode active material" in the present invention means a particle diameter corresponding to a cumulative volume of 50% in a volume cumulative particle size distribution of positive electrode active material powder, wherein it may be measured using a laser diffraction method. For example, after dispersing the positive electrode active material powder in a dispersion medium, the dispersion medium is introduced into a commercial laser diffraction particle size measurement instrument (e.g., S-3500 by Microtrac) and then irradiated with ultrasonic waves of about 28 kHz at an output of 60 W to obtain a volume cumulative particle size distribution graph, and the D50 may be measured by a method in which a particle diameter at a cumulative volume of 50% in the obtained volume cumulative particle size distribution graph is obtained.

A "specific surface area" in the present invention is measured by a Brunauer-Emmett-Teller (BET) method, wherein, specifically, the specific surface area may be calculated from nitrogen adsorption isotherms which are obtained in a liquid nitrogen atmosphere at 77K using BELSORP-MAX (MicrotracBELcorp.) .

The expression "cation mixing ratio" in the present invention means a ratio (%) of nickel ions (Ni²⁺) incorporated and occupied based on a total amount of lithium (Li) sites in a lithium layer of a layer-structured lithium nickel-based oxide, and means a value measured through X-ray diffraction (XRD) analysis.

Specifically, the X-ray diffraction analysis may be performed as follows. A diffraction pattern of a sample was measured using a Bruker D8 Endeavor (CuKα, λ=1.54Å) equipped with a LynxEye XE-T position sensitive detector with a fixed divergence slit (FDS) of 0.5° in a 2θ range of 15° to 90° with a step size of 0.02° in which total scan time was set to be about 20 minutes. Rietveld refinement was performed for the measured data in consideration of charge at each site (metals at transition metal sites were +3, Ni at a Li site was +2) and cation mixing. Instrumental broadening during the analysis was considered by using Fundamental Parameter Approach (FPA) provided in a Bruker TOPAS program, and entire peaks in the measurement range were used during fitting. A peak shape was fitted using only Lorentzian contribution as a first principle (FP) among types available in the TOPAS, and, in this case, strain was not considered. An excess value of Ni identified after the Rietveld refinement is defined as the cation mixing ratio.

### Positive Electrode Material

A positive electrode material according to the present invention includes a large-particle diameter positive electrode active material having a relatively larger particle diameter and a small-particle diameter positive electrode active material having a relatively smaller particle diameter and specifically has a bimodal particle size distribution. In this case, since the small-particle diameter positive electrode active material fills pores of the large-particle diameter positive electrode active material during electrode rolling, the positive electrode material according to the present invention has an advantage in that electrode density is increased and high energy density may be achieved.

However, when an electrode is formed by mixing the large-particle diameter positive electrode active material and the small-particle diameter positive electrode active material, since the small-particle diameter positive electrode active material receives relatively more physical stress while the small-particle diameter active material positioned between large-diameter particles play a role in alleviating a direct contact between the large-diameter particles, particle breakage may be intensified. With respect to a positive electrode active material with a high nickel content, since it has a higher degree of anisotropic contraction and expansion during charge and discharge than a positive electrode active material with a low nickel content, there is a high possibility of crack generation in a particle and cracks transferred to a surface may cause penetration of an electrolyte solution, and thus, lifetime of a battery may be reduced while a positive electrode material is structurally degraded.

In order to solve this problem, since the present inventors adjusted Ml/Ms, as a ratio of a cation mixing ratio (Ml) of the large-particle diameter positive electrode active material to a cation mixing ratio (Ms) of the small-particle diameter positive electrode active material, within a range of 0.6 to 4.0 to have a low cation mixing ratio of small-diameter particles with severe particle breakage, acceleration of degradation of the entire positive electrode was suppressed. Specifically, since cation mixing of the active material is highly likely to occur mainly on a surface which is unstable due to relatively higher interfacial energy than that of the inside of the primary particle, a chain reaction of ion exchange occurs around a site where the cation mixing occurs during charge and discharge such that structural collapse tends to propagate, and thus, this affects generation and propagation of microcracks.

In a case in which the Ml/Ms is less than 0.6, there is a problem in that degradation due to a surface state of the small particle is accelerated as described above, and, in a case in which the Ml/Ms is greater than 4.0, it is undesirable in that the degradation is accelerated when microcracks occur in the large particle. The Ml/Ms may specifically be in a range of 0.8 to 3.5, and may more specifically be in a range of 1.0 to 3.0.

The cation mixing ratio (Ml) of the large-particle diameter positive electrode active material may be in a range of 1.0 at% to 2.0 at%, more preferably, 1.2 at% to 1.5 at%. When the cation mixing ratio (Ml) of the large-particle diameter positive electrode active material satisfies the above range, it is desirable in that lifetime may be improved by improving durability by preventing the generation of the microcracks in the large-particle diameter positive electrode active material as much as possible during battery operation. Herein, at% means atomic%.

Also, the cation mixing ratio (Ms) of the small-particle diameter positive electrode active material may be in a range of 0.5 at% to 1.5 at%, more preferably, 0.8 at% to 1.3 at%. When the cation mixing ratio (Ms) of the small-particle diameter positive electrode active material satisfies the above range, it is desirable in that the degradation due to the particle breakage of the small-particle diameter positive electrode active material may be suppressed.

Furthermore, the present inventors adjusted Pl/Ps, as a ratio of an average particle diameter (Pl) of primary particles of the large-particle diameter positive electrode active material to an average particle diameter (Ps) of primary particles of the small-particle diameter positive electrode active material, within a range of 0.1 to 2.0. In a case in which the Pl/Ps is less than 0.1 or greater than 2.0, since it means that particle strength of the large or small particle is not good, an amount of fine powder generated is increased as the particle breakage of the small particles is increased during an electrode rolling process, and, as a result, since a side-reaction area is also increased, it is undesirable in that degradation of the battery is accelerated to degrade high-temperature lifetime and output characteristics. The Pl/Ps may specifically be in a range of 0.1 to 1.5, and may more specifically be in a range of 0.3 to 1.0.

That is, since the adjustment of the Ml/Ms and the Pl/Ps within the above ranges means suppression of the particle breakage of the large-particle diameter positive electrode active material and suppression of the surface degradation of the small-particle diameter positive electrode active material, there is an effect of improving the durability of the positive electrode material and ultimately improving the lifetime of the battery.

In an embodiment of the present invention, D50 of the large-particle diameter positive electrode active material may be in a range of 8 um to 18 um, preferably 10 um to 18 µm, and more preferably 10 um to 15 um. Also, D50 of the small-particle diameter positive electrode active material may be in a range of 2 um to 7 um, preferably 3 um to 6 µm, and more preferably 4 um to 6 um. When the D50 of the large-particle diameter positive electrode active material and the D50 of the small-particle diameter positive electrode active material satisfy the above ranges, it is desirable in that electrode rolling characteristics may be maximized.

The large-particle diameter positive electrode active material and the small-particle diameter positive electrode active material may each independently be composed of a single particle; a pseudo-single particle; a secondary particle in which a plurality of primary particles are aggregated; or a combination thereof. Specifically, the large-particle diameter positive electrode active material may be composed of secondary particles, and the small-particle diameter positive electrode active material may be composed of single particles and/or pseudo-single particles. In this case, the breakage and degradation of the small particles may be suppressed, and the rolling characteristics of the electrode may be improved.

The average particle diameter (Pl) of the primary particles of the large-particle diameter positive electrode active material may be in a range of 0.2 um to 1.0 um, more preferably, 0.2 um to 0.8 um. When the average particle diameter (Pl) of the primary particles of the large-particle diameter positive electrode active material satisfies the above range, it is desirable in terms of minimizing the particle breakage.

The average particle diameter (Ps) of the primary particles of the small-particle diameter positive electrode active material may be in a range of 0.5 um to 2.5 um, preferably 0.5 um to 2.0 um, and more preferably 0.8 um to 2.0 um. When the average particle diameter (Ps) of the primary particles of the small-particle diameter positive electrode active material satisfies the above range, it is desirable in terms of suppressing the small-particle breakage and suppressing a side reaction.

In an embodiment of the present invention, when a specific surface area of the large-particle diameter positive electrode active material is Bl and a specific surface area of the small-particle diameter positive electrode active material is Bs, Bl/Bs may be in a range of 0.15 to 1.6, preferably 0.3 to 1.6, and more preferably 0.5 to 1.5. Since the larger the specific surface area of the positive electrode active material is, the larger the surface area, which may participate in a charge/discharge reaction, is, output characteristics may be improved, but, accordingly, since this also means that a degraded surface portion is increased, it is important to appropriately adjust the specific surface area. Considering that the small particle has a larger surface area per weight than the large particle, it is desirable for the positive electrode material according to the present invention to adjust the Bl/Bs within the above range.

Specifically, the specific surface area of the large-particle diameter positive electrode active material may be in a range of 0.2 m²/g to 1.0 m²/g, preferably 0.4 m²/g to 0.8 m²/g, and more preferably 0.6 m²/g to 0.8 m²/g, and the specific surface area of the small-particle diameter positive electrode active material may be in a range of 0.5 m²/g to 1.2 m²/g, preferably 0.5 m²/g to 1.0 m²/g, and more preferably 0.6 m²/g to 1.0 m²/g.

Specifically, the large-particle diameter positive electrode active material and the small-particle diameter positive electrode active material may each include a lithium nickel-based oxide including nickel, cobalt, and manganese.

In an embodiment of the present invention, the large-particle diameter positive electrode active material and the small-particle diameter positive electrode active material may each include a lithium nickel-based oxide in which a molar ratio of nickel among transition metals is 70 mol% or more, more preferably, 80 mol% or more.

The large-particle diameter positive electrode active material and the small-particle diameter positive electrode active material may each include a lithium nickel-based oxide represented by Formula 1 below, and the lithium nickel-based oxide included in the large-particle diameter positive electrode active material and the lithium nickel-based oxide included in the small-particle diameter positive electrode active material are the same or different from each other.

[Formula 1] Li₁₊ₓ(NiₐCo_{b}Mn_{c}M_{d})O_{2-y}

In Formula 1,
M is at least one selected from the group consisting of aluminum (Al), magnesium (Mg), vanadium (V), titanium (Ti), zirconium (Zr), niobium (Nb),and tungsten (W), and
x, a, b, c, and d respectively satisfy -0.10≤x≤0.20, 0.50≤a<1.0, 0<b≤0.40, 0<c≤0.30, 0≤d≤0.10, a+b+c+d=1, and 0≤y≤0.05.
1+x represents a molar ratio of lithium in the lithium nickel-based oxide, wherein x may satisfy -0.1≤x≤0.2 or 0≤x≤0.2. When the molar ratio of the lithium satisfies the above range, a crystal structure of the lithium nickel-based oxide may be stably formed.
a represents a molar ratio of nickel among total metals excluding lithium in the lithium nickel-based oxide, wherein a may satisfy 0.60≤a<1, 0.70≤a<1, or 0.85≤a<1. When the molar ratio of the nickel satisfies the above range, high energy density may be exhibited to achieve high capacity.
b represents a molar ratio of cobalt among the total metals excluding lithium in the lithium nickel-based oxide, wherein b may satisfy 0<b≤0.30, 0<b≤0.20, or 0<b≤0.10. When the molar ratio of the cobalt satisfies the above range, good resistance characteristics and output characteristics may be achieved.
c represents a molar ratio of manganese among the total metals excluding lithium in the lithium nickel-based oxide, wherein c may satisfy 0<c≤0.25, 0<c≤0.20, or 0<c≤0.10. When the molar ratio of the manganese satisfies the above range, structural stability of the positive electrode active material is excellent.

In an embodiment of the present invention, the large-particle diameter positive electrode active material may include at least one doping element selected from the group consisting of Al, Mg, V, Ti, Zr, Nb, and W, and, in this case, there is an effect of suppressing structural degradation and improving high-temperature durability. Preferably, the large-particle diameter positive electrode active material may include Al as the doping element. In other words, d representing a molar ratio of the doping element among the total metals excluding lithium in the lithium nickel-based oxide may satisfy 0<d≤0.08, 0<d≤0.06, or 0<d≤0.05.

In an embodiment of the present invention, the lithium nickel-based oxide may have a molar ratio of nickel among transition metals of 70 mol% or more, more preferably,80 mol% or more.

The lithium nickel-based oxide included in the large-particle diameter positive electrode active material may have a higher molar ratio of the nickel among the transition metals than the lithium nickel-based oxide included in the small-particle diameter positive electrode active material. In this case, there is an advantage in that degradation in positive electrode scale may be suppressed by setting a Ni composition of the small particle with a large reaction area and relatively severe particle breakage to a relatively low level.

The large-particle diameter positive electrode active material and the small-particle diameter positive electrode active material according to the present invention may further include a coating layer on a surface of the lithium nickel-based oxide particle, if necessary. In this case, the coating layer, for example, may include at least one coating element selected from the group consisting of Al, Ti, W, boron (B), fluorine (F), phosphorus (P), Mg, nickel (Ni), cobalt (Co), iron (Fe), chromium (Cr), V, copper (Cu), calcium (Ca), zinc (Zn), Zr, Nb, manganese (Mn), strontium (Sr), antimony (Sb), bismuth (Bi), silicon (Si), and sulfur (S). In a case in which the coating layer is present on the surface of the lithium nickel-based oxide, a contact between an electrolyte and the lithium nickel-based oxide is reduced by the coating layer, and, as a result, an effect of reducing gas generation or transition metal dissolution due to a side reaction with the electrolyte may be obtained. Preferably, the coating layer may include B, Co, Al, or a combination thereof, and may more preferably include Co. In a case in which Co is included in the coating layer, an effect of improving output and reducing resistance may be obtained in addition to an effect of suppressing the side reaction with the electrolyte solution.

The positive electrode material may include the large-particle diameter positive electrode active material and the small-particle diameter positive electrode active material in a weight ratio of 50:50 to 90:10, preferably,50:50 to 80:20. When the weight ratio of the large-particle diameter positive electrode active material to the small-particle diameter positive electrode active material is within the above range, the small particles may be disposed between the large particles while minimizing space loss. Accordingly, since packing density is optimized and it is advantageous in distributing stress applied between the active materials during rolling, it is desirable in terms of improving the electrode rolling characteristics and achieving high energy.

### Positive Electrode

Next, a positive electrode according to the present invention will be described.

The positive electrode according to the present invention includes the above-described positive electrode material of the present invention. Specifically, the positive electrode includes a positive electrode collector and a positive electrode active material layer formed on the positive electrode collector, and the positive electrode active material layer includes the positive electrode material according to the present invention.

Since the positive electrode material has been described above, detailed descriptions thereof will be omitted, and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode material, if necessary.

In this case, the positive electrode material may be included in an amount of 80 wt% to 99 wt%, more specifically, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode material particles and the adhesion between the positive electrode material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

The positive electrode may be prepared according to a typical method of preparing a positive electrode except that the above-described positive electrode material is used. Specifically, a positive electrode material mixture, which is prepared by dissolving or dispersing the above-described positive electrode material as well as optionally the binder, the conductive agent, and a dispersant, if necessary, in a solvent, is coated on the positive electrode collector, and the positive electrode may then be prepared by drying and rolling the coated positive electrode collector, or the positive electrode may be prepared by casting the positive electrode material mixture on a separate support and then laminating a film separated from the support on the positive electrode collector.

The solvent may be a solvent normally used in the art. The solvent may include dimethyl sulfoxide (DMSO), isopropyl alcohol, N-methylpyrrolidone (NMP), dimethyl formamide (DMF),acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have viscosity that may provide excellent thickness uniformity during the subsequent coating for the preparation of the positive electrode.

### Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOp(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN-, and (CF₃CF₂SO₂)₂N⁻, and LiPF₆, LiClO₄, LiAsF₆, LiBF₄, LiSbF₆, LiAl0₄, LiAlCl₄, LiCF₃SO₃, LiC₄F₉SO₃, LiN (C₂F₅SO₃)₂, LiN (C₂F₅SO₂)₂, LiN (CF₃SO₂)₂, LiCl, LiI, or LiB(C₂O₄)₂ may be used as the lithium salt. The lithium salt may be used in a concentration range of 0.1 M to 4.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in more detail, according to specific examples.

### <Preparation Examples: - Preparation of Positive Electrode Active Materials>

### (1) Preparation Example 1 - Preparation of Large-Particle Diameter Active Materials(Preparation of Positive Electrode Active Materials A to E)

Ni_{0.90}Co_{0.05}Mn_{0.05}(OH)₂, LiOH, and Al(OH)₃ were put into a Henschel mixer (700L) in amounts such that a molar ratio of (Ni+Co+Mn) :Li:Al was 1:1.05:0.03,and mixing was performed at a center speed of 400 rpm for 20 minutes. The mixed powder was put into an alumina crucible having a size of 330 mm × 330 mm, and heat-treated (sintered) at 750°C for 15 hours in an oxygen (O₂) atmosphere. The heat-treated active material was mixed with Di-water in a weight ratio of 50:50, washed by stirring for 10 minutes, and then dried in a drying oven at 120°C for 12 hours. Thereafter, 0.1 wt% of H₃BO₃ based on a total weight of the active material was mixed with the dried active material, and a heat treatment was then performed at 300°C for 10 hours to prepare large-particle diameter positive electrode active material A.

Positive electrode active materials B to E were prepared through the same process as the preparation process of the positive electrode active material A except that the Li and Al molar ratios and the sintering temperature were changed as shown in Table 1 below.

**[Table 1]**

| | Li molar ratio | Al molar ratio | Sintering temperature (°C) |
|---|---|---|---|
| A | 1.05 | 0.03 | 750 |
| B | 1.03 | 0.03 | 750 |
| C | 1.03 | 0.03 | 720 |
| D | 1.01 | 0.03 | 800 |
| E | 1.03 | 0.03 | 700 |

### (2) Preparation Example 2 - Preparation of Small-Particle Diameter Active Materials (Preparation of Positive Electrode Active Materials F to J)

Ni_{0.88}Co_{0.06}Mn_{0.06}(OH)₂ and LiOH were put into a Henschel mixer (700L) in amounts such that a molar ratio of (Ni+Co+Mn) :Li:Al was 1:1.05:0.03,and mixing was performed at a center speed of 400 rpm for 20 minutes. The mixed powder was put into an alumina crucible having a size of 330 mm × 330 mm, and heat-treated (sintered) at 790°C for 15 hours in an oxygen (O₂) atmosphere. The heat-treated active material was mixed with Di-water in a weight ratio of 50:50, washed by stirring for 10 minutes, and then dried in a drying oven at 120°C for 12 hours. Thereafter, 0.1 wt% of H₃BO₃ based on a total weight of the active material was mixed with the dried active material, and a heat treatment was then performed at 300°C for 10 hours to prepare small-particle diameter positive electrode active material F.

Positive electrode active materials G to K were prepared through the same process as the preparation process of the positive electrode active material F except that the Li and Al molar ratios and the sintering temperature were changed as shown in Table 2 below.

**[Table 2]**

| | Li molar ratio | Al molar ratio | Sintering temperature (°C) |
|---|---|---|---|
| F | 1.05 | 0.03 | 790 |
| G | 1.07 | 0.03 | 810 |
| H | 1.01 | 0.03 | 730 |
| I | 1.03 | 0.03 | 750 |
| J | 1.01 | 0.03 | 850 |
| K | 1.09 | 0.03 | 880 |

### (3) Measurement of Physical Properties of the Positive Electrode Active Materials

A cation mixing ratio, an average particle diameter of primary particles, D50, and a specific surface area were measured for each of the positive electrode active materials prepared in Preparation Examples 1 and 2 by the following methods, and the results thereof are presented in Table 3 below.

### Cation Mixing Ratio

A diffraction pattern of a sample was measured using a Bruker D8 Endeavor (CuKα, λ=1.54Å) equipped with a LynxEye XE-T position sensitive detector with a fixed divergence slit (FDS) of 0.5° in a 2θ range of 15° to 90° with a step size of 0.02° in which total scan time was set to be about 20 minutes. Rietveld refinement was performed for the measured data in consideration of charge at each site (metals at transition metal sites were +3, Ni at a Li site was +2) and cation mixing. Instrumental broadening during the analysis was considered by using Fundamental Parameter Approach (FPA) provided ina Bruker TOPAS program, and entire peaks in the measurement range were used during fitting. A peak shape was fitted using only Lorentzian contribution as a first principle (FP) among types available in the TOPAS, and, in this case, strain was not considered. An excess value of Ni identified after the Rietveld refinement was defined as a cation mixing ratio.

### Average Particle Diameter of Primary Particles

After a cross-sectional image of each positive electrode active material was observed using a scanning electron microscope and diameters of the longest axes of 20 primary particles in a cross section of each positive electrode active material were measured, an average particle diameter of the primary particles was measured by a method of obtaining an arithmetic mean value of the diameters of the longest axes.

### D50

A volume cumulative particle size distribution graph was obtained by a method of putting 0.05 g of each positive electrode active material powder in a particle size distribution checking device (Microtrac, MT S-3500) and irradiating the powder with ultrasonic waves of about 28 kHz at an output of 60 W, and D50 was measured by a method of obtaining a particle diameter at 50% of cumulative amount of volume in the obtained volume cumulative particle size distribution graph.

### Specific Surface Area

3 g of each positive electrode active material powder was put into BELSORP-MAX (MicrotracBEL corp.), nitrogen adsorption isotherms were obtained in a liquid nitrogen atmosphere at 77K, and a BET specific surface area was then calculated using the nitrogen adsorption isotherms.

**[Table 3]**

| | | Cation mixing ratio (at%) | Average particle diameter of primary particles(µ m) | D50(µm) | Specific surface area (m²/g) |
|---|---|---|---|---|---|
| Preparation Example 1 | A | 1.1 | 0.5 | 11.4 | 0.50 |
| | B | 1.5 | 0.6 | 11.2 | 0.78 |
| | C | 0.9 | 0.2 | 10.8 | 0.88 |
| | D | 2.4 | 1.0 | 11.8 | 0.60 |
| | E | 1.0 | 0.2 | 10.9 | 0.99 |
| Preparation Example 2 | F | 1.1 | 0.5 | 4.5 | 1.00 |
| | G | 0.5 | 2.0 | 5.3 | 0.52 |
| | H | 4.5 | 0.2 | 4.4 | 1.76 |
| | I | 2.4 | 0.25 | 4.5 | 1.20 |
| | J | 5.0 | 4.0 | 6.0 | 0.40 |
| | K | 1.5 | 4.2 | 7.5 | 0.60 |

### <Examples and Comparative Examples: Preparation of Positive Electrode Materials>

### Example 1.

A positive electrode material was prepared by mixing the positive electrode active material A prepared in Preparation Example 1 and the positive electrode active material F prepared in Preparation Example 2 at a weight ratio of 80:20.

### Example 2.

A positive electrode material was prepared by mixing the positive electrode active material B prepared in Preparation Example 1 and the positive electrode active material G prepared in Preparation Example 2 at a weight ratio of 80:20.

### Example 3.

A positive electrode material was prepared by mixing the positive electrode active material A prepared in Preparation Example 1 and the positive electrode active material G prepared in Preparation Example 2 at a weight ratio of 80:20.

### Example 4.

A positive electrode material was prepared by mixing the positive electrode active material A prepared in Preparation Example 1 and the positive electrode active material F prepared in Preparation Example 2 at a weight ratio of 50:50.

### Comparative Example 1.

A positive electrode material was prepared by mixing the positive electrode active material C prepared in Preparation Example 1 and the positive electrode active material H prepared in Preparation Example 2 at a weight ratio of 80:20.

### Comparative Example 2.

A positive electrode material was prepared by mixing the positive electrode active material D prepared in Preparation Example 1 and the positive electrode active material I prepared in Preparation Example 2 at a weight ratio of 80:20.

### Comparative Example 3.

A positive electrode material was prepared by mixing the positive electrode active material E prepared in Preparation Example 1 and the positive electrode active material J prepared in Preparation Example 2 at a weight ratio of 80:20.

### Comparative Example 4.

A positive electrode material was prepared by mixing the positive electrode active material D prepared in Preparation Example 1 and the positive electrode active material G prepared in Preparation Example 2 at a weight ratio of 80:20.

### Comparative Example 5.

A positive electrode material was prepared by mixing the positive electrode active material C prepared in Preparation Example 1 and the positive electrode active material K prepared in Preparation Example 2 at a weight ratio of 80:20.

### <Experimental Examples>

### Experimental Example 1-Fine Powder Generation Rate

After 3 g of each of the positive electrode material powders prepared in Examples 1 to 4 and Comparative Examples 1 to 5 was put into a cylindrical metal mold with a diameter of 2 cm and pressed at a pressure of 6 tons, a generation rate of fine powder of less than 1 um was measured by measuring a volume cumulative particle size distribution. The particle size distribution was measured using S-3500 by Microtrac, and the generation rate of fine powder having a particle diameter of 1 um or less was obtained based on a total weight of the positive electrode material and then converted into volume%. Measurement results are presented in Table 4 below.

### Experimental Example 2- High-temperature Life Characteristics Evaluation of Battery

Each of the positive electrode materials prepared in Examples 1 to 4 and Comparative Examples 1 to 5, a conductive agent (acetylene black), and a PVdF binder were mixed in N-methylpyrrolidone at a weight ratio of 97.5:1.0:1.5 to prepare a positive electrode slurry. One surface of an aluminum current collector was coated with the positive electrode slurry, dried, and then rolled to prepare a positive electrode.

Specifically, a negative electrode active material (a mixture in which natural graphite and artificial graphite were mixed in a weight ratio of 50:50), an SBR binder (M37, LG Chem), and a conductive agent (acetylene black) were added to water, as a solvent, at a weight ratio of 96.0:3.0:1.0 to prepare a negative electrode slurry (solid content: 60 wt%). A copper thin film, as a negative electrode collector, was coated with the negative electrode slurry, dried, and rolled to prepare a negative electrode.

After an electrode assembly was prepared by disposing a 15 um thick polyethylene-based separator between the positive electrode and the negative electrode, the electrode assembly was inserted into a battery case, and an electrolyte was injected there into to prepare a lithium secondary battery. In this case, a solution, in which 1 M LiPF₆ was dissolved in an organic solvent in which ethylene carbonate (EC) :ethyl methyl carbonate (EMC) were mixed in a volume ratio of 1:2, was used as an electrolyte solution.

While charging of the lithium secondary battery prepared as described above at 0.3 C to 4.25 V at 45°C and discharging of the battery at 0.3 C to 2.5 V were set as one cycle and 100 cycles of the charging and discharging were performed, a resistance increase rate (DCIR increase) and capacity retention were measured. Measurement results are presented in Table 4 below.

In this case, the resistance increase rate and the capacity retention were calculated through Equations 1 and 2 below. Resistance increase rate (%) = {(resistance after 100 cycles/resistance after 1 cycle) × 100} - 100 Capacity retention (%) = (discharge capacity after 100 cycles/discharge capacity after 1 cycle) × 100

**[Table 4]**

| | Ml/Ms | Pl/Ps | Bl/Bs | Experiment al Example 1 | Experimental Example 2 | |
|---|---|---|---|---|---|---|
| | | | | Fine powder generation rate (%) | Capacity retentio n (%) | Resistan ce increase rate (%) |
| Example 1 | 1.0 | 1.0 | 0.5 | 4 | 94 | 125 |
| Example 2 | 3.0 | 0.3 | 1.5 | 1.5 | 95 | 118 |
| Example 3 | 2.2 | 0.3 | 1.0 | 1.0 | 95 | 128 |
| Example 4 | 1.0 | 1.0 | 0.5 | 2.1 | 96 | 134 |
| Comparative Example 1 | 0.2 | 1.0 | 0.5 | 3.4 | 90 | 164 |
| Comparative Example 2 | 1.0 | 4.0 | 0.5 | 7 | 85 | 183 |
| Comparative Example 3 | 0.2 | 0.05 | 2.5 | 10 | 81 | 210 |
| Comparative Example 4 | 4.8 | 0.5 | 1.2 | 6.5 | 86 | 192 |
| Comparative Example 5 | 0.6 | 0.05 | 1.5 | 7.7 | 78 | 215 |

According to the results of Table 4, with respect to the positive electrode materials of Examples 1 to 4 in which the ratio (Ml/Ms) of the cation mixing ratio of the large-particle diameter positive electrode active material to the cation mixing ratio of the small-particle diameter positive electrode active material was included in a range of 0.6 to 4.0 and the ratio (Pl/Ps) of the average particle diameter of the primary particles of the large-particle diameter positive electrode active material to the average particle diameter of the primary particles of the small-particle diameter positive electrode active material was included in a range of 0.1 to 2.0,it may be confirmed that they had less particle breakage due to rolling and excellent lifetime at high temperature. In contrast, with respect to the positive electrode material of Comparative Example 1 in which the Pl/Ps value satisfied the range of the present invention, but the Ml/Ms value was less than 0.6,it may be confirmed that it had less particle breakage, but capacity retention and resistance increase rate at high temperature were not as good as those of the examples, and it may be confirmed that the positive electrode material of Comparative Example 4 having an Ml/Ms value of greater than 4.0 had severe particle breakage and poor resistance increase rate as well as poor capacity retention at high temperature.

Also, with respect to the positive electrode material of Comparative Example 2 in which the Ml/Ms value satisfied the range of the present invention, but the Pl/Ps value was greater than 2.0, it may be confirmed that particle breakage and high-temperature performance were not as good as those of the examples, and, with respect to Comparative Example 5 having a Pl/Ps value of less than 0.1, it may be understood that high-temperature life characteristics (capacity retention) and output characteristics (resistance increase rate) as well as particle breakage were degraded in comparison to those of the examples.

Furthermore, with respect to Comparative Example 3 in which both the Ml/Ms and the Pl/Ps values were outside the ranges of the present invention, it may be confirmed that it exhibited the most degraded characteristics.

## Claims

1. A positive electrode material for a lithium secondary battery, the positive electrode material comprising a large-particle diameter positive electrode active material and a small-particle diameter positive electrode active material,
wherein the large-particle diameter positive electrode active material and the small-particle diameter positive electrode active material each independently comprise a lithium nickel-based oxide,
when a cation mixing ratio of the large-particle diameter positive electrode active material is Ml and a cation mixing ratio of the small-particle diameter positive electrode active material is Ms, Ml/Ms is in a range of 0.6 to 4.0, and
when an average particle diameter of primary particles of the large-particle diameter positive electrode active material is Pl and an average particle diameter of primary particles of the small-particle diameter positive electrode active material is Ps, Pl/Ps is in a range of 0.1 to 2.0.

2. The positive electrode material for a lithium secondary battery of claim 1, wherein D50 of the large-particle diameter positive electrode active material is in a range of 8 um to 18 µm.

3. The positive electrode material for a lithium secondary battery of claim 1, wherein D50 of the small-particle diameter positive electrode active material is in a range of 2 um to 7 µm.

4. The positive electrode material for a lithium secondary battery of claim 1, wherein the large-particle diameter positive electrode active material and the small-particle diameter positive electrode active material are each independently composed of a single particle composed of the primary particles; a secondary particle in which a plurality of the primary particles are aggregated; or a combination thereof.

5. The positive electrode material for a lithium secondary battery of claim 1, wherein the average particle diameter of the primary particles of the large-particle diameter positive electrode active material is in a range of 0.2 um to 1.0 um.

6. The positive electrode material for a lithium secondary battery of claim 1, wherein the average particle diameter of the primary particles of the small-particle diameter positive electrode active material is in a range of 0.5 um to 2.0 um.

7. The positive electrode material for a lithium secondary battery of claim 1, wherein, when a specific surface area of the large-particle diameter positive electrode active material is Bl and a specific surface area of the small-particle diameter positive electrode active material is Bs, Bl/Bs is in a range of 0.15 to 1.6.

8. The positive electrode material for a lithium secondary battery of claim 1, wherein the large-particle diameter positive electrode active material and the small-particle diameter positive electrode active material each comprise the lithium nickel-based oxide represented by Formula 1:
[Formula 1] Li₁₊ₓ(NiₐCo_{b}Mn_{c}M_{d})O_{2-y}
wherein, in Formula 1,
M is at least one selected from the group consisting of aluminum (Al), magnesium (Mg), vanadium (V), titanium (Ti), zirconium (Zr), niobium (Nb),and tungsten (W), and
x, a, b, c, and d respectively satisfy -0.10≤x≤0.20, 0.50≤a<1.0, 0<b≤0.40, 0<c≤0.30, 0≤d≤0.05, a+b+c+d=1, and 0≤y≤0.05.

9. The positive electrode material for a lithium secondary battery of claim 1, wherein the large-particle diameter positive electrode active material and the small-particle diameter positive electrode active material each comprise the lithium nickel-based oxide in which a molar ratio of nickel among transition metals is 70 mol% or more.

10. The positive electrode material for a lithium secondary battery of claim 1, wherein the positive electrode material comprises the large-particle diameter positive electrode active material and the small-particle diameter positive electrode active material in a weight ratio of 50:50 to 90:10.

11. The positive electrode material for a lithium secondary battery of claim 1, wherein the cation mixing ratio of the large-particle diameter positive electrode active material is in a range of 1.0 at% to 2.0 at%.

12. The positive electrode material for a lithium secondary battery of claim 1, wherein the cation mixing ratio of the small-particle diameter positive electrode active material is in a range of 0.5 at% to 1.5 at%.

13. A positive electrode for a lithium secondary battery, the positive electrode comprising the positive electrode material for a lithium secondary battery of claim 1.

14. A lithium secondary battery comprising the positive electrode for a lithium secondary battery of claim 13.
